# EUROPEAN PATENT APPLICATION

(11) **EP 4 576 867 A1**
(43) Date of publication of application: **25.06.2025**
(21) Application number: 22957313.4
(22) Date of filing: 29.08.2022
(51) Int. Cl.: H04W 24/10, H04W 52/04

(54) **TERMINAL DEVICE AND WIRELESS COMMUNICATION METHOD**

(71) Applicant: Softbank Corp., Tokyo 105-7529 (JP)
(72) Inventor: FUSHIKI, Masashi, Tokyo 105-7529 (JP)
(74) Representative: Meissner Bolte Partnerschaft mbB
(86) International application number: PCT/JP2022/032443
(87) International publication number: WO 2024/047709

(57) **Abstract**

A terminal device (10) capable of radio communication with a plurality of base station devices (50), wherein the terminal device (10) includes: a reception unit (11) that receives an enquiry from one base station device among the plurality of base station devices (50); and a notification unit (15) that, when the terminal device (10) can communicate with the plurality of base station devices (50) located at different positions, notifies the one base station device of interference information about interference between radio signals on the basis of the enquiry when the terminal device transmits the radio signals respectively to the plurality of base station devices (50) located at the different positions. Consequently, it is possible to provide a radio communication technology for enhancing the utilization efficiency of radio communication resources between the terminal device (10) and the base station devices (50).

## Description

### TECHNICAL FIELD

The present invention relates to a terminal device and a radio communication method.

### BACKGROUND ART

The 3GPP (Third Generation Partnership Project), which is an international standardization organization, is examining NR (New Radio), which is a new radio access technology for 5G (Fifth Generation) cellular communication systems. NR is being studied as a technology for making it possible to implement a wider variety of services than LTE (Long Term Evolution)-Advanced, which is the fourth-generation cellular communication system. For example, regarding NR, implementation requirements are defined for different use scenarios, such as eMBB (enhanced Mobile Broad Band) for realizing high-speed and high-capacity communication, URLLC (Ultra-Reliable and Low Latency Communication) for realizing ultra-reliable and low-delay communication, and mMTC (massive Machine Type Communication) for realizing simultaneous connection of many Internet-of-Things (IoT) devices.

NR adopts carrier aggregation (CA) capable of bandwidth expansion by aggregating (binding), for example, a plurality of 20-MHz frequency bandwidths which are called component carriers (CC) (see NPL1). Also, NR adopts EN-DC (E-UTRA-NR Dual Connectivity) by a base station device eNB (evolved NodeB) in E-UTRA (Evolved Universal Terrestrial Radio Access) and a base station device gNB (g-NodeB) in NR (see NPL2). Regarding EN-DC, there are known a collocated scenario that is a scenario for eNB and gNB, which are located at the same position, to communicate with a terminal device, and a non-collocated scenario that is a scenario for eNB and gNB, which are located at different positions, to communicate with the terminal device.

Meanwhile, regarding NR, the terminal device serves as Type 1 UE and supports the collocated scenario in Intra-band EN-DC and Intra-band NR CA. Moreover, in Intra-band EN-DC, the terminal device serves as Type 2 UE and supports the non-collocated scenario capable of using a 2×2 MIMO method (the maximum number of available MIMO layers is 2) for each CC (see NPL3). In this case, the terminal device (Type 2 UE) which supports the non-collocated scenario causes information to that effect to be included in terminal capability information "UECapabilityInformation" of the terminal device and reports it to the base station device (see NPL1).

Regarding a radio communication system which adopts the non-collocated scenario, the distance between a terminal device and a plurality of base station devices located at different positions varies. The terminal device executes transmission power control to transmit a radio signal(s) to each of the base station devices located at the different positions according to the distance to each of them. Accordingly, the transmission power for the terminal device to transmit the radio signal to one base station device is different from the transmission power to transmit the radio signal to other base station devices. For example, when the terminal device transmits the radio signal to a base station device A which is located away from the terminal device by distance A that is longer than distance B by which a base station device B is located away from the terminal device, the radio signal is transmitted with higher output than that of a case where the terminal device transmits the radio signal to the base station device B located away from the terminal device by the distance B. In this case, the radio signal on the high output side, that is, the radio signal which is transmitted from the terminal device to the base station device A located away from the terminal device by the distance A leaks to other frequencies (emission), so significant interference occurs with respect to the radio signal on the low output side, that is, the radio signal which is transmitted from the terminal device to the base station device B located away from the terminal device by the distance B.

Meanwhile, NPL 4 defines a permissible emission level of a terminal device. Specifically, NPL 4 describes that when the terminal device executes radio communication by using a frequency in excess of 1 GHz, emission of -30 dBm/MHz or less is permissible.

### CITATION LIST

### PATENT LITERATURE

NPL 1: 3GPP Specifications "TS 38.306 Ver.16.7.0 (2021-12)"
NPL 2: 3GPP Specifications "TS 37.340 Ver.16.8.0 (2021-12)"
NPL 3: 3GPP Specifications "TS 38.133 Ver.17.5.0 (2022-04)"
NPL 4: 3GPP Specifications "TS 38.101-1 Ver.17.6.0 (2022-06)"

However, with a conventional radio communication system, the base station device only has information about the permissible emission level of the terminal device and the base station device cannot become aware of interference information about the interference between radio signals when a terminal device capable of actually communicating with that base station device transmits the radio signals respectively to the plurality of base station devices located at different positions. Accordingly, the conventional communication method cannot perform appropriate scheduling according to the interference information about the terminal device. Therefore, there is fear that the utilization efficiency of radio communication resources between the terminal device and the base station devices may degrade.

The present invention was devised in light of the above-described circumstances and it is an object to provide a radio communication technology for enhancing the utilization efficiency of the radio communication resources between the terminal device and the base station devices.

### GENERAL DISCLOSURE

A terminal device according to an aspect of the present invention is a terminal device capable of radio communication with a plurality of base station devices, wherein the terminal device includes: a reception unit that receives an enquiry from one base station device among the plurality of base station devices; and a notification unit that, when the terminal device can communicate with the plurality of base station devices located at different positions, notifies the one base station device of interference information about interference between radio signals on the basis of the enquiry when the terminal device transmits the radio signals respectively to the plurality of base station devices located at the different positions.

A radio communication method according to an aspect of the present invention is a radio communication method executed by a terminal device capable of radio communication with a plurality of base station devices, wherein the radio communication method includes: receiving an enquiry from one base station device among the plurality of base station devices; and when the terminal device can communicate with the plurality of base station devices located at different positions, notifying the one base station device of interference information about interference between radio signals on the basis of the enquiry when the terminal device transmits the radio signals respectively to the plurality of base station devices located at the different positions.

### ADVANTAGEOUS EFFECTS OF THE INVENTION

Radio communication technology for enhancing the utilization efficiency of the radio communication resources between the terminal device and the base station devices can be provided according to the present invention.

### BRIEF DESCRIPTION OF DRAWINGS

[Fig. 1] Fig. 1 is a configuration diagram illustrating an example of a schematic configuration of a radio communication system according to an embodiment;
[Fig. 2] Fig. 2 is a configuration diagram illustrating an example of a hardware configuration of a terminal device and a base station device according to an embodiment;
[Fig. 3] Fig. 3 is a configuration diagram illustrating an example of a functional block configuration of the terminal device according to an embodiment;
[Fig. 4] Fig. 4 is a configuration diagram illustrating an example of a functional block configuration of the base station device according to an embodiment;
[Fig. 5] Fig. 5 is a flowchart illustrating explaining an example of radio signal transmission processing of the terminal device according to an embodiment;
[Fig. 6] Fig. 6 is a flowchart illustrating an example of the radio signal transmission processing of the terminal device according to an embodiment;
[Fig. 7] Fig. 7 is a flowchart illustrating an example of the radio signal transmission processing of the terminal device according to an embodiment; and
[Fig. 8] Fig. 8 is a diagram illustrating an example of an interference status between radio signals when a terminal device transmits radio signals respectively to a plurality of base station devices located at different positions according to an embodiment.

### DESCRIPTION OF EMBODIMENTS

Embodiments of the present invention will be described below. In the following description of the drawings, identical or similar parts are denoted by identical or similar reference numerals. However, the drawings are schematic. Therefore, specific dimensions, etc. should be determined in light of the following description. Furthermore, it is a matter of course that the drawings include parts regarding which the relationship and ratio of dimensions are different from each other. Furthermore, the technical scope of the present invention should not be understood as being limited to the embodiments.

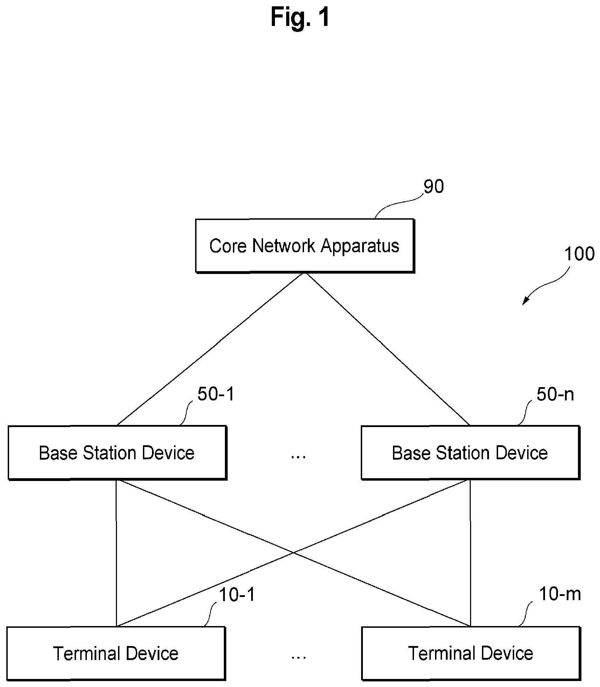

A schematic configuration of a radio communication system according to an embodiment will be described with reference to Fig. 1. Fig. 1 is a configuration diagram illustrating an example of a schematic configuration of a radio communication system 100. The radio communication system 100 is configured by including terminal devices 10-1 to 10-m, base station devices 50-1 to 50-n, and a core network apparatus 90. The radio communication system 100 is a radio communication system targeted for, for example, NR (New Radio). Incidentally, the present invention is applicable to any radio communication system having at least a terminal device and a base station device and is not limited to those targeted for NR. For example, the present invention is also applicable to LTE and LTE-Advanced. It is also applicable to a radio communication system where NR is used for part of the radio communication system.

LTE and LTE-Advanced will be also hereinafter referred to as E-UTRA (Evolved Universal Terrestrial Radio Access). An area (coverage area) formed by a base station device is called a cell and E-UTRA and NR are cellular communication systems constructed by a plurality of cells. Regarding the radio communication system according to this embodiment, either a TDD (Time Division Duplex) or FDD (Frequency Division Duplex) system may be applied, and a different system may be applied to each cell.

Each of terminal devices 10-1 to 10-m wirelessly connects with one of base station devices 50-1 to 50-n. Moreover, each of the terminal devices 10-1 to 10-m may wirelessly connect with two or more of the base station devices 50-1 to 50-n simultaneously. Each of the base station devices 50-1 to 50-n can use E-UTRA or NR. For example, the base station device 50-1 may use NR and the base station device 50-n may use E-UTRA, or vice versa. The base station device in E-UTRA will be referred to as eNB (evolved NodeB) and the base station device in NR will be referred to as gNB (g-NodeB).

The radio communication system 100 is, for example, a radio communication system compatible with carrier aggregation (CA) and EN-DC (E-UTRA-NR Dual Connectivity). The carrier aggregation is processing capable of expanding the bandwidth by aggregating (or binding), for example, a plurality of 20-MHz frequency bandwidths which are called "component carriers (CC)."

With EN-DC (E-UTRA-NR Dual Connectivity), the base station device eNB and the base station device gNB can cooperate with each other and communicate with the terminal device 10. For example, a scenario for eNB and gNB which are located at the same position to communicate with the terminal device 10 is called a "collocated scenario" and a scenario for eNB and gNB which are located at different positions to communicate with the terminal device 10 is called a "non-collocated scenario."

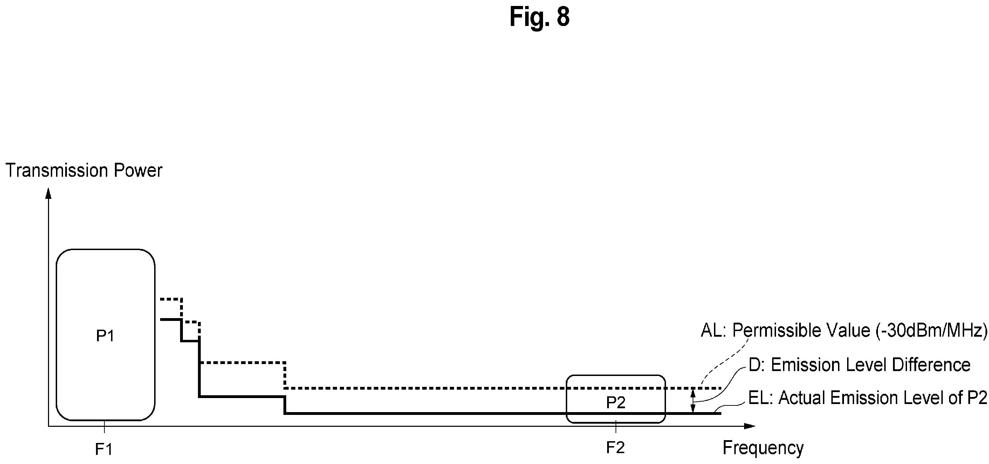

Now, the outline of the radio communication system 100 according to an embodiment of the present invention will be explained below. Fig. 8 is a diagram illustrating an example of an interference status between radio signals when the terminal device transmits the radio signals respectively to a plurality of base station devices located at different positions according to an embodiment. For example, a transmission power output P1 of a case where the terminal device transmits the radio signal at frequency F1 to a base station device A which is located away from the terminal device by distance A that is longer than distance B, is a higher output than a case where the terminal device transmits the radio signal at frequency F2 to a base station device B which is located away from the terminal device by the distance B.

Then, with the conventional radio communication system as described above, the base station device only has the information about the permissible emission level of the terminal device. Therefore, when an actual emission level EL of the transmission power output P2 at the frequency F2 is about the same as a permissible emission level AL or is equal to or lower than the permissible emission level AL, but is not considerably lower than the permissible emission level AL, the base station device determines that the transmission power output P2 will be significantly influenced by the interference with the transmission power output P1 (the transmission power output P2 will succumb to the interference), and thereby does not permit the uplink simultaneous transmission from a plurality of carriers (a plurality of terminal devices).

On the other hand, if the actual emission level EL of the transmission power output P2 at the frequency F2 is considerably lower than the permissible emission level AL, the transmission power output P2 of the base station device will not be influenced significantly by the interference with the transmission power output P1 (the transmission power output P2 will not succumb to the interference), so the base station device can permit the uplink simultaneous transmission from the plurality of terminal devices. However, the base station device only has the information about the permissible emission level AL of the terminal device as described above, so it cannot recognize the actual interference status. Therefore, practically, even if the base station device can permit the uplink simultaneous transmission from the plurality of terminal devices, there is fear that the uplink simultaneous transmission from the plurality of terminal devices may not be permissible.

So, the terminal device according to an embodiment of the present invention is a terminal device capable of radio communication with a plurality of base station devices, wherein the terminal device includes: the reception unit that receives an enquiry about capability information of the terminal device from one base station device among the plurality of base station devices; and the notification unit that, when the terminal device can communicate with the plurality of base station devices located at different positions, notifies the one base station device of the interference information about interference between radio signals on the basis of the enquiry when the terminal device transmits the radio signals respectively to the plurality of base station devices located at the different positions.

Accordingly, the base station device can obtain the interference information about the interference between radio signals on the basis of the enquiry when the terminal device transmits the radio signals respectively to the plurality of base station devices which are located at different positions. So, the base station device can perform appropriate scheduling based on the obtained interference information. Therefore, it is possible to enhance the utilization efficiency of radio communication resources between the terminal device and the base station devices. Moreover, since the appropriate scheduling is performed, it is also possible to enhance the throughput of the uplink communication of the terminal device. Therefore, the technology according to this embodiment can contribute to the achievement of Goal 9 of the Sustainable Development Goals (SDGs), which aims to "build resilient infrastructure, promote inclusive and sustainable industrialization and foster innovation."

The respective configurations included by the radio communication system 100 will be explained below more specifically. Fig. 1 illustrates the terminal devices 10-1 to 10-m as m terminal devices (m is an integer equal to 2 or more). In the following description, when these m terminal devices are described without distinguishing them from one another, part of the reference numerals will be omitted and they will be simply referred to as the "terminal device(s) 10." Moreover, in Fig. 1, the base station devices 50-1 to 50-n are illustrated as n base station devices (n is an integer equal to 2 or more). In the following description, when these n base station devices are described without distinguishing them from one another, part of the reference numerals will be omitted and they will be simply referred to as the "base station device(s) 50." The terminal device(s) in E-UTRA and NR will be referred to as UE (User Equipment). The base station device gNB in NR may be connected to a terminal device by using a portion of the frequency band it uses (BWP: Carrier bandwidth part). In the following description, when a cell(s) is described, it includes BWP.

Examples of the communication terminal(s) 10 can include portable information communication equipment such as IoT devices, smart phones, mobile phones, personal digital assistants (PDAs), tablet terminals, mobile game devices, portable music payers, and wearable terminals. The terminal device 10 is connected with, for example, the base station device 50 on a cell basis and they may be connected by using a plurality of cells, for example, via carrier aggregation. When the terminal device 10 is connected via a plurality of base station devices, that is, in the case of DC (Dual Connectivity), a base station device which is originally connected is called a "master node (MN)" and a base station device(s) which is additionally connected is called a "secondary node(s) (SN)." The base station devices are connected to each other by a base station interface. Moreover, the base station device 50 and the core network apparatus 90 are connected by a core interface. The base station interface is used to exchange a control signal which is necessary for a handover and a cooperative operation between the base station devices.

The core network apparatus 90 has, for example, the base station devices 50 under its control and mainly manages load control between the base station devices and mobility control such as calling (paging) and location registration of the terminal device 10. NR defines an AMF (Access and Mobility Management Function) for mobility management and an SMF (Session Management Function) for session management as a functional group of a control plane (C-plane) in the core network apparatus 90. E-UTRA defines an MME (Mobility Management Entity) corresponding to the AMF.

Incidentally, Fig. 1 illustrates an example in which the core network apparatus 90 is composed of a single apparatus; however, the present invention is not limited to this example. For example, the core network apparatus may be composed of a plurality of apparatuses including a server, a gateway, etc.

In a radio resource control (RRC) layer, the terminal device 10 and the base station device 50 transmit and receive RRC messages to proceed with session processing (also referred to as a "connection sequence"). As the session processing proceeds, the terminal device 10 changes from an idle state (RRC Idle) to a connected state (RRC Connected) of being connected with the base station device 50. The idle state corresponds to a standby status of the terminal device 10.

Moreover, the terminal device 10 and the base station device 50 transmit and receive MAC control elements (MAC CE) in a medium access control (MAC) layer. RRC messages are transmitted as RRC PDU (protocol data units). A common control channel (CCCH), a dedicated control channel (DCCH), a paging control channel (PCCH), a broadcast control channel (BCCH), or a multicast control channel (MCCH) is used as a logical channel to be mapped. A MAC CE is transmitted as a MAC PDU (or MAC subPDU). A MAC subPDU is equivalent to a service data unit (SDU) in the MAC layer plus, for example, an 8-bit header; and a MAC PDU includes one or more MAC subPDUs.

Physical channels and physical signals related to an embodiment of the present invention will be described below. Of the physical channels related to the embodiment of the present invention, an explanation will be provided below about a physical broadcast channel (PBCH), a primary synchronization signal (PSS), a secondary synchronization signal (SSS), a physical random-access channel (PRACH), and a physical downlink control channel (PDCCH).

Incidentally, regarding the radio communication system according to the embodiment, there also exist, other than those mentioned above, at least a physical uplink control channel (PUCCH), a physical downlink shared channel (PDSCH), a physical uplink shared channel (PUSCH), a scheduling reference signal (SRS), and a demodulation reference signal (DMRS), but any detailed description about them has been omitted.

### <Physical Broadcast Channel (PBCH)>

The physical broadcast channel (PBCH) is transmitted from the base station device 50 to the terminal device 10 and is used to report common parameters (system information) in cells under the control of the base station device 50. The system information is further classified into a master information block (MIB) and a system information block (SIB). The system information block is further divided into SIB1, SIB2, and so on and then transmitted.

The system information includes information necessary to connect to the cell, and for example, the MIB includes a system frame number and information indicating whether or not camping on to the cell is possible. Moreover, SIB1 includes parameters for calculating cell quality (cell selection parameters), channel information which is common between cells (random-access control information, PUCCH control information, and PUSCH control information), and other system information such as scheduling information.

The physical broadcast channel (PBCH) is periodically transmitted as a set with a synchronization signal, which is composed of a primary synchronization signal (PSS) and a secondary synchronization signal (SSS), as a synchronization signal block (SSB (or SS/PBCH)). The terminal device 10 can acquire cell identifier (cell ID) information and reception timing and measure the signal quality of the relevant cell by receiving the synchronization signal block (SSB).

The system information reported by, for example, the physical broadcast channel (PBCH) is also called "system broadcast information" or "broadcast information." Moreover, the camp-on to a cell means that a terminal device 10 has completed cell selection and/or cell reselection and the terminal device 10 has entered a state of having selected a cell to monitor the system broadcast information and paging information. The terminal device 10 establishes the aforementioned RRC connection with the base station device 50 which forms the camped-on cell.

### <Primary Synchronization Signal (PSS)>

The primary synchronization signal (PSS) is used by the terminal device 10 to synchronize with a reception symbol timing and a frequency of a downstream signal of the base station device 50. The primary synchronization signal (PSS) is a signal which the terminal device 10 firstly attempts to detect in the procedure of detecting a cell of the base station device 50 (hereinafter also referred to as a "cell search procedure"). Regarding the primary synchronization signal (PSS), three types of signals from "0" to "2" are repeatedly used based on the physical cell ID. Incidentally, the physical cell ID is an identifier of a physical cell, and 504 types of IDs are used in E-UTRA and 1008 types of IDs are used in NR.

### <Secondary Synchronization Signal (SSS)>

The secondary synchronization signal (SSS) is used by the terminal device 10 to detect the physical ID of the base station device 50. Specifically, the secondary synchronization signal (SSS) is a signal used by the terminal device 10 to detect the physical cell ID in the cell search procedure. Regarding the secondary synchronization signal (SSS), 168 types of signals from "0" to "167" are repeatedly used in E-UTRA and 336 types of signals from "0" to "335" are repeatedly used in NR based on the physical cell ID.

### <Physical Random-Access Channel (PRACH)>

The physical random-access channel (PRACH) is used by the terminal device 10 to transmit a random-access preamble to the base station device 50. The physical random-access channel (PRACH) is generally used in a state where uplink synchronization is not established between the terminal device 10 and the base station device 50; and is used for transmission timing adjustment information (timing advance) and uplink radio resource requests. Information indicating a radio resource capable of transmitting the random-access preamble is transmitted to the terminal by using broadcast information and RRC messages.

### <Physical Downlink Control Channel (PDCCH)>

The physical downlink control channel (PDCCH) is transmitted from the base station device 50 to notify the terminal device 10 of downlink control information (DCI). The downlink control information includes uplink radio resource information (uplink grant (UL grant)) or downlink radio resource information (downlink grant (DL grant)) which can be used by the terminal device 10. The downlink grant is information indicating scheduling of a physical downlink data shared channel (PDSCH). The uplink grant is information indicating scheduling of a physical uplink shared channel (PUSCH). When the physical downlink control channel (PDCCH) is transmitted in response to the random-access preamble, the physical downlink data shared channel (PDSCH) indicated by the physical downlink control channel (PDCCH) is a random-access response and includes, for example, index information of the random-access preamble, transmission timing adjustment information, and uplink grant.

### <Hardware Configuration>

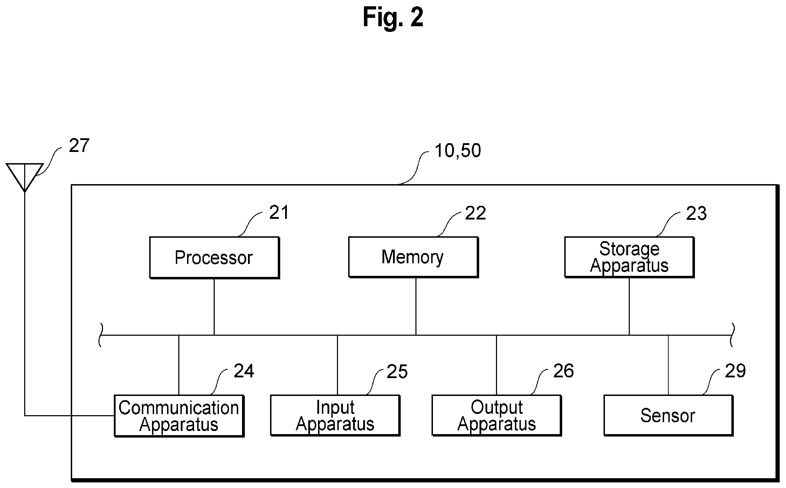

A hardware configuration of the terminal device and the base station device according to an embodiment will be described with reference to Fig. 2. Fig. 2 is a configuration diagram illustrating an example of the hardware configuration of the terminal device 10 and the base station device 50.

Referring to Fig. 2, each of the terminal device 10 and the base station device 50 includes, for example, a processor 21, a memory 22, a storage apparatus 23, a communication apparatus 24, an input apparatus 25, an output apparatus 26, an antenna 27, and a sensor 29.

The processor 21 is configured to control the operation of the respective units of the terminal device 10 or the base station device 50. The processor 21 is configured by including, for example, integrated circuits such as a CPU (Central Processing Unit), a DSP (Digital Signal Processor), an ASIC (Application Specific Integrated Circuit), a PLD (Programmable Logic Device), an FPGA (Field Programmable Gate Array), and an SoC (System-on-a-chip).

Each of the memory 22 and the storage apparatus 23 is configured to store programs, data, and so on. The memory 22 is configured from, for example, a ROM (Read Only Memory), an EPROM (Erasable Programmable ROM), an EEPROM (Electrically Erasable Programmable ROM), and/or a RAM (Random Access Memory). The storage apparatus 23 is configured from, for example, storage such as an HDD (Hard Disk Drive), an SSD (Solid State Drive), and/or an eMMC (Embedded Multi-Media Card).

The communication apparatus 24 is configured to perform communication via a wired and/or radio network. The communication apparatus 24 is configured by including, for example, a network card and a communication module. Moreover, the communication apparatus 24 may be configured by exemplarily including an amplifier, an RF (Radio Frequency) front end 243 that performs processing related to a radio signal, and a signal processing unit 241 that performs baseband signal processing.

For example, the RF front end 243 performs D/A (Digital-to-Analog) conversion, modulation, frequency conversion, power amplification, etc. on a digital baseband signal received from the signal processing unit 241 to generate a radio signal to be transmitted from the antenna 27. Moreover, the RF front end 243 performs frequency conversion, demodulation, A/D (Analog to Digital) conversion, etc. on the radio signal received from the antenna 27 to generate a digital baseband signal and transmit it to the signal processing unit 241. The signal processing unit 241 performs processing for converting the digital baseband signal into an IP packet(s) and processing for converting the IP packet(s) into the digital baseband signal.

The input apparatus 25 is configured to input information by a user's operation. The input apparatus 25 is configured by including, for example, a keyboard, a touch panel, a mouse, and/or a microphone.

The output apparatus 26 is configured to output information. The output apparatus 26 is configured by including, for example, a display apparatus such as a liquid crystal display, an EL (Electro Luminescence) display, or a plasma display, and/or a speaker.

The antenna 27 is configured to be capable of emitting (radiating) and receiving electric waves (electromagnetic waves) in one or a plurality of specified frequency bands. The antenna 27 may be an antenna with directivity. The directive antenna 27 varies in gain depending on the direction of the antenna. Incidentally, the antenna 27 may be non-directional, that is, may not have directionality. The non-directional antenna 27 has substantially the same gain from all 360-degree directions in a horizontal plane, in a vertical plane, or in both horizontal and vertical planes.

The antenna 27 is not limited to a single antenna. The terminal device 10 and the base station device 50 may include a plurality of antennas. Each of the terminal device 10 and the base station device 50 includes a plurality of antennas so as to be capable of using the 2×2 MIMO method and the 4×4 MIMO method as described earlier. When the terminal device 10 and the base station device 50 include a plurality of antennas, for example, they may be divided into transmission antennas and reception antennas. Moreover, when the plurality of antennas are divided into the transmission antenna(s) and the reception antenna(s), at least either of them may include a plurality of antennas. Incidentally, when the terminal device 10 and the base station device 50 include a plurality of transmission and reception antennas or a plurality of transmission antennas, the above-described beam forming technology can be used.

The sensor 29 which the terminal device 10 has includes a sensor(s) for detecting the position, direction, and acceleration of the terminal device 10. The sensor 29 which the terminal device 10 has includes, for example, at least one sensor from among a GPS (Global Positioning System) sensor, a gyro sensor, and an acceleration sensor. On the other hand, the sensor 29 which the base station device 50 has may include, for example, a sensor(s) for detecting environmental information such as the temperature, humidity, weather, or seismic intensity scale at the base station device 50.

### <Functional Block Configuration>

### (Terminal Device)

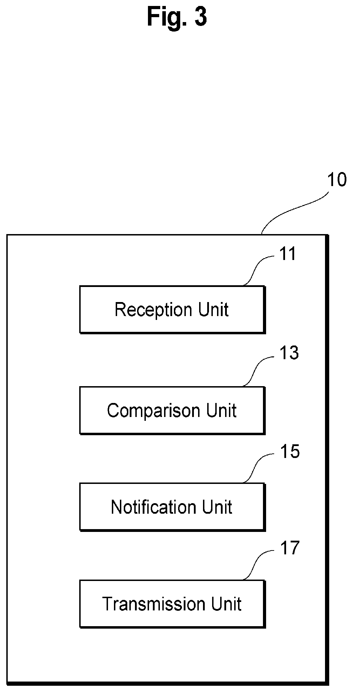

A functional block configuration of a terminal device according to an embodiment will be described with reference to Fig. 3. Fig. 3 is a configuration diagram illustrating an example of the functional block configuration of the terminal device 10. Incidentally, Fig. 3 is intended to illustrate functional blocks required in the description of this embodiment and it does not eliminate a case where the terminal device 10 includes functional blocks other than those illustrated.

The terminal device 10 includes, for example, a reception unit 11, a comparison unit 13, a notification unit 15, and a transmission unit 17 as the functional blocks.

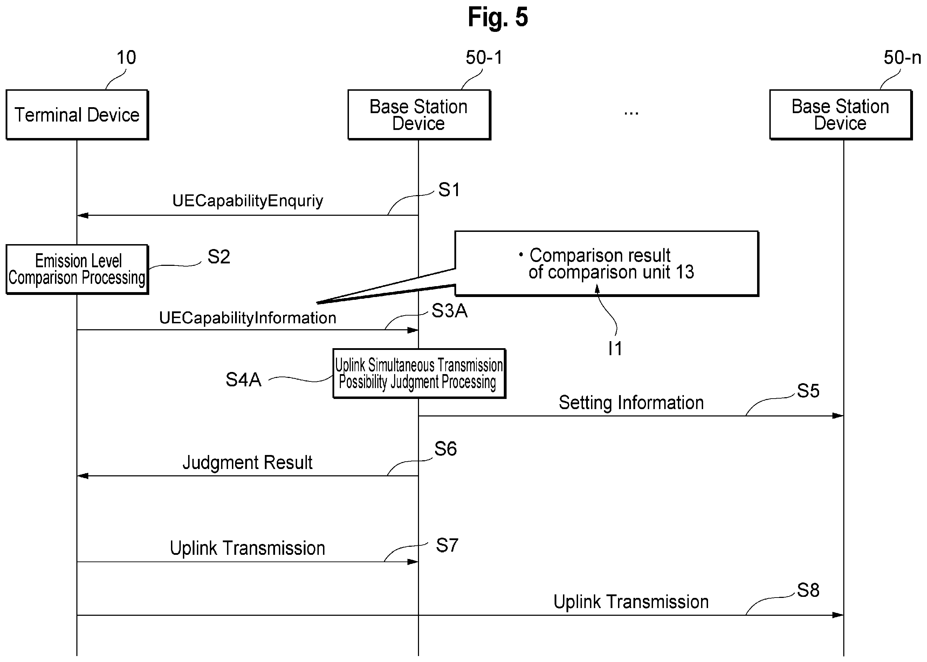

The reception unit 11 accepts various types of information from the base station device(s) 50 in Fig. 1. The reception unit 11 accepts, for example, an enquiry about the terminal capability information of the terminal device 10 from the base station device 50. The terminal capability information includes, for example, "UECapabilityInformation" and the enquiry about the terminal capability information includes a "UECapabilityEnquriry" as illustrated in Fig. 5 to Fig. 7.

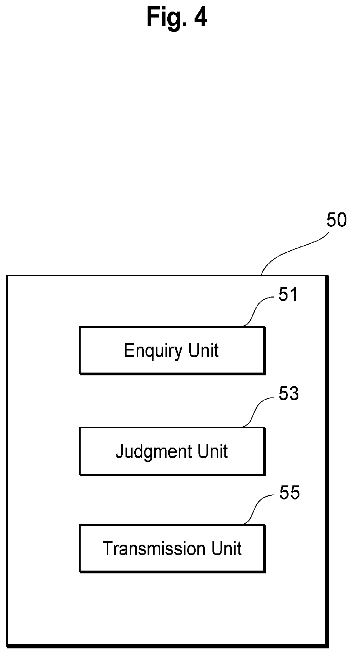

If the base station device 50 (the judgment unit 53 indicated in Fig. 4) determines that the communication with that base station device 50 is possible (the uplink simultaneous transmission is possible), the reception unit 11 receives an answer to that effect.

The reception unit 11 may receive a radio signal transmitted, for example, by using a MIMO method which is set based on the terminal capability information about the MIMO method. When the MIMO method appropriate for the terminal capability of the terminal device 10 is set, the base station device 50 executes access control processing for transmitting the radio signal to the terminal device 10 (for example, CA processing and MIMO processing). The reception unit 15 receives the transmitted radio signal as a result of the execution of the access control processing by the base station device 50.

The comparison unit 13 compares the interference level indicating the interference degree of the terminal device 10 (for example, EL indicated in Fig. 8: actual emission level of the terminal device) with a specified threshold value (for example, a "permissible value" indicated in Fig. 8). A certain constant value is set for each terminal device 10 as the actual "emission level" of the terminal device 10; however, this does not eliminate the possibility that the "emission level" may change due to an actual communication status. The actual "emission level" of the terminal device 10 is set based on, for example, components and members (such as an amplifier and a filter) used in a manufacturing process of the terminal device.

The "specified threshold value" is a permissible value and is, for example, a permissible emission level. The permissible emission level is set according to a frequency used by the terminal device 10. For example, if the frequency used by the terminal device 10 is 1 GHz or higher, the permissible emission level may be set as -30 dBm/MHz. The "specified threshold value" may be retained by the terminal device 10 in advance or may be transmitted as a broadcast signal from at least one base station device among the plurality of base station devices 50 to the terminal device 10.

The notification unit 15 notifies the base station device 50 of the various types of information in response to the enquiry from the base station device 50. For example, the notification unit 15 returns (or reports) "UECapabilityInformation" to the base station device 50 based on the "UECapabilityEnquriry" received from the base station device 50.

The notification unit 15 notifies the base station device 50 of the comparison result, which is obtained by the comparison unit 13 by comparing the interference level indicating the interference degree of the terminal device 10 with the specified threshold value, as the terminal capability information (interference information). If the comparison result by the comparison unit 13 satisfies a specified condition, the notification unit 15 may report the comparison result as the terminal capability information. The "comparison result" may include, for example, other than the information indicating that the interference level of the terminal device 10 is considerably smaller than the permissible value, information about at least one of the difference between the interference level of the terminal device 10 and the permissible value and a ratio of the interference level of the terminal device 10 and the permissible value.

The "specified condition" includes a condition regarding at least one of the difference between the interference level of the terminal device 10 and the permissible value and the ratio of the interference level of the terminal device 10 and the permissible value. The "specified condition" includes, for example, that the difference (absolute value) between the interference level of the terminal device 10 and the permissible value is larger than a set value (for example, the interference level of the terminal device 10 is considerably smaller than the permissible value).

The notification unit 15 may report the interference level indicating the interference degree of the terminal device 10 as the interference information. Moreover, the notification unit 15 may report information based on the interference level of the terminal device 10 and the permissible value (the specified threshold value) (for example, -30 dBm/MHz) as the interference information. The information based on the interference level of the terminal device 10 and the permissible value includes, for example, information about at least one of the difference between the interference level of the terminal device 10 and the permissible value and the ratio of the interference level of the terminal device 10 and the permissible value.

Incidentally, the notification unit 15 is only required to notify the base station device 50 of the availability information and the form regarding the notification is arbitrary. There is no limitation to the notification form for the notification unit 15 to report the interference information as "UECapabilityInformation," and the availability information may be reported as other information.

The transmission unit 17 transmits the radio signal to the base station device 50. The transmission unit 17 executes the uplink simultaneous transmission based on the answer from the terminal device 50 indicating that the uplink simultaneous transmission is possible.

Moreover, the transmission unit 17 transmits the radio signal by dynamically changing a band capable of simultaneous transmission upon the carrier aggregation on the basis of, for example, a radio resource allocated from the base station device 50. The transmission unit 17 executes access control processing for transmitting the radio signal from the terminal device 10 to base station device 50 (for example, CA processing and MIMO processing).

Incidentally, the reception unit 11, the comparison unit 13, the notification unit 15, and the transmission unit 17 may be implemented by, for example, the communication apparatus 24 illustrated in Fig. 2 or may be implemented by the processor 21 in addition to the communication apparatus 24 by executing a program(s) stored in the storage apparatus 23. When the processor 21 executes a program, the program may be stored in a storage medium. The storage medium storing the relevant program may be a non-transitory computer-readable storage medium. The non-transitory storage medium is not particularly limited, but may be, for example, a storage medium such as a USB (Universal Serial Bus) memory or a CD-ROM (Compact Disc ROM).

### (Base Station Device)

A functional block configuration of the base station device according to an embodiment will be described with reference to Fig. 4. Fig. 4 is a configuration diagram illustrating an example of the functional block configuration of the base station device 50. Incidentally, Fig. 4 is to show functional blocks required in the description of this embodiment and it does not eliminate a case where the base station device 50 includes functional blocks other than those illustrated.

The base station device 50 exemplarily includes an enquiry unit 51, a judgment unit 53, and a transmission unit 55 as functional blocks.

The enquiry unit 51 transmits the "UECapabilityEnquriry" to enquire about the terminal capability information "UECapabilityInformation" of the terminal device 10. The enquiry unit 51 receives the terminal capability information as an answer from the terminal device 10.

The judgment unit 53 judges whether the terminal device 10 can perform the uplink simultaneous transmission or not, based on the interference information reported by the notification unit 15 for the terminal device 10. If the comparison result of the comparison unit 13 for the terminal device 10 shows that, for example, the interference level of the terminal device 10 is considerably lower than the permissible value, the judgment unit 53 determines that the terminal device 10 is capable of the uplink simultaneous transmission.

If it is determined by the judgment unit 53 that the communication with the plurality of base station devices 50 is possible (the uplink simultaneous transmission is possible), the transmission unit 55 transmits an answer to that effect.

The transmission unit 55 transmits various kinds of setting information for the uplink simultaneous transmission of the terminal device 10 to the terminal device 10. Moreover, when the transmission unit 55 determines that the uplink simultaneous transmission is possible, it shares the various kinds of setting information (such as CA setting information) for the uplink simultaneous transmission of the terminal device 10 with other base station devices. Furthermore, the transmission unit 55 executes access processing for transmitting a radio signal from the base station device 50 to the terminal device 10 (for example, the CA processing and the MIMO processing).

Incidentally, the enquiry unit 51, the judgment unit 53, and the transmission unit 55 may be implemented by, for example, the communication apparatus 24 or may be implemented by the processor 21 in addition to the communication apparatus 24 by executing a program(s) stored in the storage apparatus 23. When the processor 21 executes a program, the program may be stored in a storage medium. The storage medium storing the relevant program may be a non-transitory computer-readable storage medium. The non-transitory storage medium is not particularly limited, but may be, for example, a storage medium such as a USB memory or a CD-ROM.

### <Radio Signal Transmission Processing>

### (Example 1)

An explanation will be provided about Example 1 of radio signal transmission processing of the terminal device according to the embodiment with reference to Fig. 5. Example 1 of the radio signal transmission processing is based on the premise that it is an example of the case where the plurality of base station devices 50-1...50-n support the non-collocated scenario and, additionally, the terminal device 10 also supports the non-collocated scenario. Moreover, an RRC connection is established between the terminal device 10 and the base station device 50. For example, the terminal device 10 and the base station device 50 transmit and receive RRC messages in their RRC layer to proceed with session processing (also called a connection sequence). The above-described prerequisite of Example 1 of the radio signal transmission processing also applies to Example 2 and Example 3 of the radio signal transmission processing described later.

Referring to Fig. 5, for example, the base station device 50-1 (one base station device) among the plurality of base station devices 50 transmits "UECapabilityEnquriry" to the terminal device 10 to enquire about the terminal capability information "UECapabilityInformation" of the terminal device 10 (step S1).

After receiving the enquiry ("UECapabilityEnquriry") from the base station device 50-1, the terminal device 10 compares the interference level indicating the interference degree of the terminal device 10 (for example, EL indicated in Fig. 8: actual emission level of the terminal device) with the specified threshold value (for example, the "permissible value" indicated in Fig. 8) (step S2).

Specifically, the terminal device 10 returns (or reports) its own terminal capability information "UECapabilityInformation" to the base station device 50-1 in response to the enquiry from the base station device 50-1 (step S3A). The terminal device 10 notifies the base station device 50 of the comparison result as terminal capability information I1 which is obtained by comparing the interference level indicating the interference degree of the terminal device 10 with the specified threshold value. Also, the terminal device 10 transmits information about at least one of Intra-band EN-DC and Intra-band NR CA which it supports, to the base station device 50-1.

The base station device 50-1 judges whether the terminal device 10 can perform the uplink simultaneous transmission or not, based on the interference information included in the terminal capability information of the terminal device 10 received from the terminal device 10 (step S4A).

The base station device 50-1 can communicate with another base station device(s) 50-n which supports the non-collocated scenario. Therefore, the base station device 50-1 transmits (shares) various kinds of setting information for the uplink simultaneous transmission of the terminal device 10 and the ability of the terminal device 10 to perform the uplink simultaneous transmission to the other base station device(s) 50-n (step S5).

Incidentally, the timing for the base station device 50-1 to share the setting information with the other base station device(s) 50-n is arbitrary. The setting information and the judgment result may be transmitted to the other base station device(s) 50-n at every timing set and generated by the base station device 50-1 or may be transmitted in response to a request from the other base station device(s) 50-n.

When the terminal device 10 can perform the uplink simultaneous transmission, the base station device 50-1 transmits the judgment result to the terminal device 10 (step S6). The base station device 50-1 transmits various kinds of setting information for the uplink simultaneous transmission of the terminal device 10 to the terminal device 10.

After receiving the various types of information from the base station device 50-1, the terminal device 10 executes the uplink simultaneous transmission (steps S7 and S8). Incidentally, the setting information and the judgment result are shared by the base station device 50-1 with the other base station device(s) 50-n as described above. Consequently, the other base station device(s) 50-n can receive the radio signal from the terminal device 10 based on the setting information for the uplink simultaneous transmission which is set by the base station device 50-1 in a manner similar to the base station device 50-1.

According to Example 1 of the radio signal transmission processing as described above, the terminal device 10 includes: the reception unit 11 that receives an enquiry from one base station device among a plurality of base station devices 50; and the notification unit 15 that, when the terminal device 10 can communicate with the plurality of base station devices 50 located at different positions, notifies the one base station device of the interference information about the interference between radio signals based on the enquiry when the terminal device 10 transmits the radio signals respectively to the plurality of base station devices 50 located at the different positions.

Accordingly, the base station device can obtain the interference information about the interference between the radio signals based on the enquiry when the terminal device transmits the radio signals respectively to the plurality of base station devices located at the different positions. So, the base station device can perform appropriate scheduling based on the obtained interference information. Therefore, it is possible to enhance the utilization efficiency of the radio communication resources between the terminal device and the base station devices. It is also possible to enhance the throughput of the uplink communication of the terminal device because the appropriate scheduling is performed.

### (Second Example)

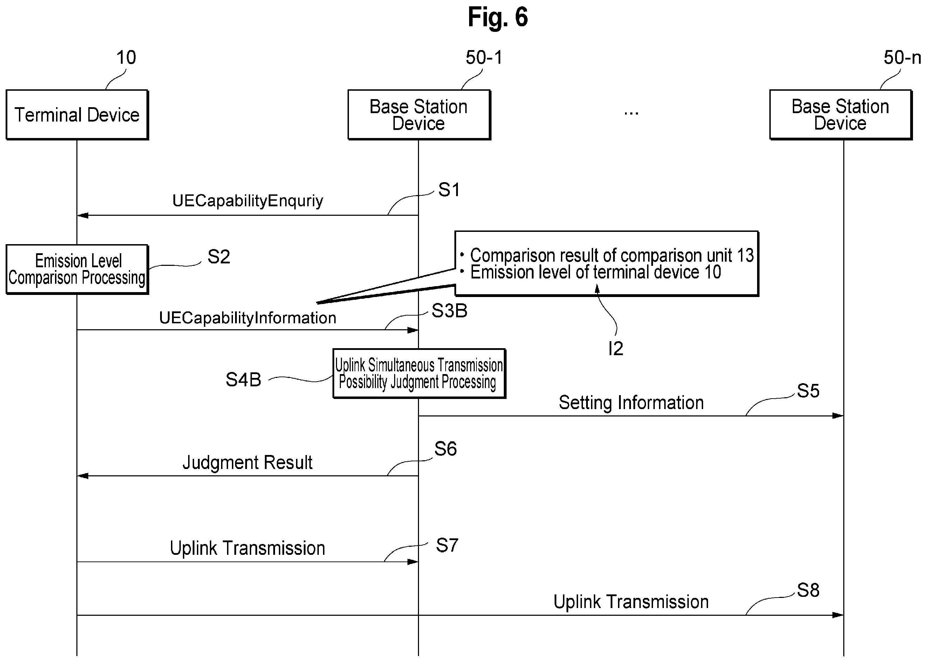

An explanation will be provided about Example 2 of the radio signal transmission processing of the terminal device according to the embodiment with reference to Fig. 6. In Example 2 of the radio signal transmission processing, the terminal device 10 notifies the base station device 50-1 of, in addition to the comparison result of the comparison unit 13, an emission level (interference level) of the terminal device 10 as the terminal capability information. Particularly, the difference from Example 1 of the radio signal transmission processing will be explained in detail below.

Referring to Fig. 6, the terminal device 10 notifies the base station device 50-1 of terminal capability information I2 including the comparison result of the comparison unit 13 and the emission level of the terminal device 10 (step S3B).

The base station device 50-1 judges whether the terminal device 10 can perform the uplink simultaneous transmission or not, based on the comparison result of the comparison unit 13 and the emission level of the terminal device 10 (step S4B).

According to Example 2 of the radio signal transmission processing, the base station device 50-1 judges whether the terminal device 10 can perform the uplink simultaneous transmission or not, based on the emission level of the terminal device 10 in addition to the comparison result of the comparison unit 13. Therefore, the terminal device 10 can further refer to the actual emission level of the terminal device 10, so whether the terminal device 10 can perform the uplink simultaneous transmission or not can be judged more accurately.

### (Third Example)

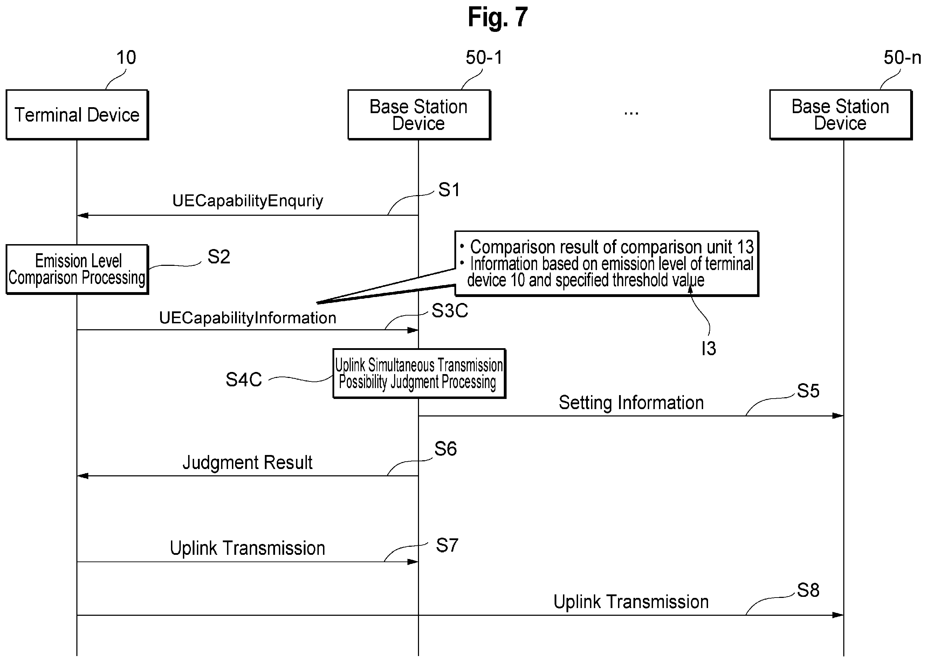

An explanation will be provided about Example 3 of the radio signal transmission processing of the terminal device according to the embodiment with reference to Fig. 7. In Example 3 of the radio signal transmission processing, the terminal device 10 notifies the base station device 50-1 of, in addition to the comparison result of the comparison unit 13, information based on the interference level of the terminal device 10 and a specified threshold value as the terminal capability information. Particularly, the difference from Example 1 of the radio signal transmission processing will be explained in detail below.

Referring to Fig. 7, the terminal device 10 notifies the base station device 50-1 of terminal capability information I3 including the comparison result of the comparison unit 13 and the information based on the interference level of the terminal device 10 and the specified threshold value (for example, information about at least one of the difference between the emission level of the terminal device 10 and the permissible value and the ratio of the emission level of the terminal device 10 and the permissible value) (step S3C).

The base station device 50-1 judges whether the terminal device 10 can perform the uplink simultaneous transmission or not, based on the comparison result of the comparison unit 13 and the information based on the emission level of the terminal device 10 and the specified threshold value (step S4C).

According to Example 3 of the radio signal transmission processing, the base station device 50-1 judges whether the terminal device 10 can perform the uplink simultaneous transmission or not, in consideration of the information based on the interference level of the terminal device 10 and the specified threshold value in addition to the comparison result of the comparison unit 13. Therefore, the terminal device 10 can further refer to, for example, the information about at least one of the difference between the emission level of the terminal device 10 and the permissible value and the ratio of the emission level of the terminal device 10 and the permissible value, so whether the terminal device 10 can perform the uplink simultaneous transmission or not can be judged more accurately.

Each embodiment or each example described above is intended to facilitate understanding of the present invention and is not intended to interpret the present invention in a limited manner. The present invention can be changed/improved without departing from the gist thereof and the invention also includes its equivalents. Moreover, the present invention can form various disclosures by appropriately combining a plurality of constituent elements disclosed in the respective embodiments or the respective examples described above. For example, some constituent elements may be deleted from all the constituent elements indicated in the embodiments. Furthermore, the constituent elements of different embodiments may be combined together as appropriate.
1. A terminal device capable of radio communication with a plurality of base station devices,
   the terminal device comprising:
   a reception unit that receives an enquiry from one base station device among the plurality of base station devices; and
   a notification unit that, when the terminal device can communicate with the plurality of base station devices located at different positions, notifies the one base station device of interference information about interference between radio signals on the basis of the enquiry when the terminal device transmits the radio signals respectively to the plurality of base station devices located at the different positions.
2. The terminal device according to clause 1,
   further comprising a comparison unit that compares an interference level indicating a degree of the interference of the terminal device with a specified threshold value, wherein when a comparison result by the comparison unit satisfies a specified condition, the notification unit reports the comparison result as the interference information.
3. The terminal device according to clause 2,
   wherein the specified threshold value is transmitted as a broadcast signal from at least one base station device among the plurality of base station devices to the terminal device.
4. The terminal device according to any one of clauses 1 to 3,
   wherein the notification unit reports an interference level indicating a degree of the interference of the terminal device as the interference information.
5. The terminal device according to any one of clauses 1 to 4,
   wherein the notification unit reports information based on an interference level indicating a degree of the interference of the terminal device and a specified threshold value as the interference information.
6. A radio communication method executed by a terminal device capable of radio communication with a plurality of base station devices,
   the radio communication method comprising:
   receiving an enquiry from one base station device among the plurality of base station devices; and
   when the terminal device can communicate with the plurality of base station devices located at different positions, notifying the one base station device of interference information about interference between radio signals on the basis of the enquiry when the terminal device transmits the radio signals respectively to the plurality of base station devices located at the different positions.

The judgment unit 53 illustrated in Fig. 4 may further have the function regarding the comparison unit 13 for the terminal device 10 illustrated in Fig. 3. The judgment unit 53 may obtain information about the interference level indicating the interference degree of the terminal device 10 from the terminal device 10 and compare the obtained interference level of the terminal device 10 with the specified threshold value. Then, the judgment unit 53 may judge whether the terminal device 10 can perform the uplink simultaneous transmission or not, based on the comparison result between the interference level of the terminal device 10 and the specified threshold value.

### REFERENCE SIGNS LIST

10 (10-1 to 10-m) terminal device(s)
11 reception unit
13 comparison unit
15 notification unit
17 transmission unit
21 processor
22 memory
23 storage apparatus
24 communication apparatus
25 input apparatus
26 output apparatus
27A, 27B antennas
29 sensor
50 (50-1 to 50-n) base station device(s)
51 enquiry unit
53 judgment unit
55 transmission unit
90 core network apparatus
100 radio communication system

## Claims

1. A terminal device (10) capable of radio communication with a plurality of base station devices (50),
the terminal device (10) comprising:
a reception unit (11) that receives an enquiry from one base station device among the plurality of base station devices (50); and
a notification unit (15) that, when the terminal device (10) can communicate with the plurality of base station devices (50) located at different positions, notifies the one base station device of interference information about interference between radio signals on the basis of the enquiry when the terminal device (10) transmits the radio signals respectively to the plurality of base station devices (50) located at the different positions.

2. The terminal device according to claim 1,
further comprising a comparison unit (13) that compares an interference level indicating a degree of the interference of the terminal device with a specified threshold value,
wherein when a comparison result by the comparison unit satisfies a specified condition, the notification unit (15) reports the comparison result as the interference information.

3. The terminal device (10) according to claim 2,
wherein the specified threshold value is transmitted as a broadcast signal from at least one base station device among the plurality of base station devices (50) to the terminal device (10).

4. The terminal device (10) according to any one of claims 1 to 3,
wherein the notification unit (15) reports an interference level indicating a degree of the interference of the terminal device (10) as the interference information.

5. The terminal device (10) according to any one of claims 1 to 4,
wherein the notification unit (15) reports information based on an interference level indicating a degree of the interference of the terminal device (10) and a specified threshold value as the interference information.

6. A radio communication method executed by a terminal device (10) capable of radio communication with a plurality of base station devices (50),
the radio communication method comprising:
receiving an enquiry from one base station device among the plurality of base station devices (50); and
when the terminal device (10) can communicate with the plurality of base station devices (50) located at different positions, notifying the one base station device of interference information about interference between radio signals on the basis of the enquiry when the terminal device (10) transmits the radio signals respectively to the plurality of base station devices (50) located at the different positions.
